# EUROPEAN PATENT SPECIFICATION

(11) **EP 3 342 507 B1**
(45) Date of publication and mention of the grant of the patent: **11.12.2019**
(21) Application number: 15891028.1
(22) Date of filing: 17.08.2015
(51) Int. Cl.: B29C 33/20, B29C 67/24, B29K 91/00, B29C 33/24

(54) **CLAMPING DEVICE FOR WAX MODEL INJECTION MOLDING AND METHOD FOR MANUFACTURING WAX MODEL**
KLEMMENVORRICHTUNG ZUM WACHSFORMSPRITZGUSS UND VERFAHREN ZUR HERSTELLUNG EINER WACHSFORM
DISPOSITIF DE SERRAGE POUR MOULAGE PAR INJECTION DE MODÈLE EN CIRE ET PROCÉDÉ DE FABRICATION DE MODÈLE EN CIRE

(43) Date of publication of application: 04.07.2018
(73) Proprietor: Eishin Technology Co., Ltd, Ayase-shi, Kanagawa 252-1107 (JP)
(72) Inventor: KUBO, Chikanari, Yamato-shi Kanagawa 242-0002 (JP)
(74) Representative: Treeby, Philip David William
(86) International application number: PCT/JP2015/073015
(87) International publication number: WO 2017/029699

(56) References cited:
- EP-A1- 2 756 895
- JP-A- H0 596 342
- JP-A- 2002 254 137
- JP-A- 2007 237 186
- JP-U- S6 366 540
- US-A- 6 065 954

## Description

### Technical Field

The present application relates to a clamp apparatus for wax mold injection molding (a clamp apparatus for injection molding a wax mold), and in particular to a clamp apparatus used for fixing a rubber mold in wax mold injection molding in lost wax precision casting.

### Background Art

Ornaments, accessories, jewelry and the likes mainly using a noble metal are small and have complicated and precise shapes. There has been a demand to produce such products in large quantities, and a lost wax precision casting method has been developed in this industry. Of course, this method is also applicable in manufacturing precision industrial components other than the above.

Lost wax precision casting in the jewelry manufacturing industry has the following steps.
A first step is a process of producing a model.
A second step is a process of producing a rubber mold having a cavity of the same shape as the model.
A third step is a process of producing a wax mold of the same shape as the model, by injecting a molten wax into a rubber mold, and taking it out. In general, by repeatedly performing the third step, a large number of wax molds are produced.
A fourth step is a process of attaching a large number of wax molds produced in the third step in a tree-like manner around a wax stick while melting a runner end portion of the wax molds, placing it in a cylindrical heat-resistant vessel, pouring plaster into the vessel, and producing a plaster mold.
A fifth step is a baking process using an electric furnace or a gas furnace or others, which conprises melting the wax in the plaster mold at a low temperature to flow it out, burning completely the wax adhered to the inside of the cavity at a moderate temperature, strengthening the plaster mold to withstand an impact at the time of pouring a noble metal in it by further increasing the temperature, and then, waiting with lowering the temperature thereof to a level suitable for pouring the noble metal.
A sixth step is a casting process of pouring a noble metal into the plaster mold having a number of cavities of the same shape as the model.
A seventh step is a finishing process consisting of breaking the plaster to pieces by rapidly cooling the plaster mold after the noble metal has been solidified, taking out the noble metals in the tree-like form, cutting away unnecessary portions, and polishing the noble metal of the same shape as the model.

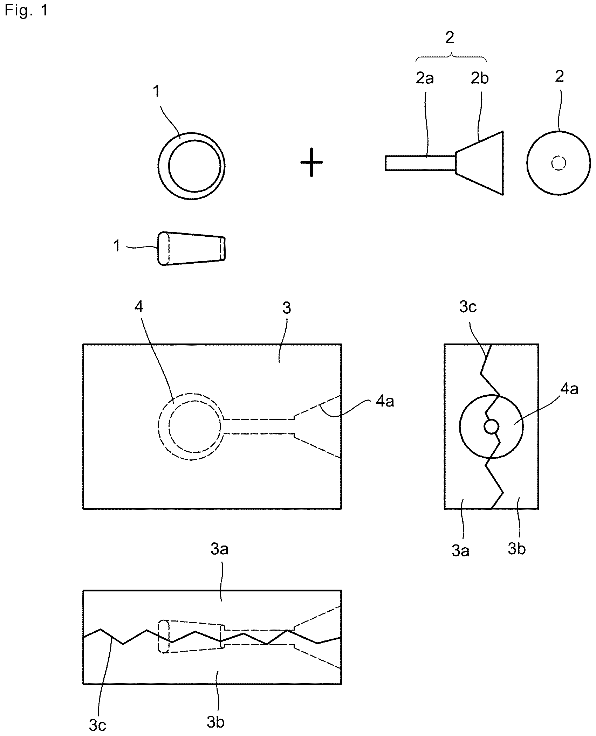

A method of manufacturing the rubber mold in the second step will be described with reference to FIG. 1. In the second step, a molding flask (not shown) of a size corresponding to a size of a rubber mold 3 to be manufactured, a model 1 and a part 2 (a sprue runner 2a and a pouring gate 2b) are used. Close the bottom of the molding flask by a plate, pour a pre-vulcanization silicon rubber material in the lower half of the flask, place the model 1 to which the part 2 is attached on the material on it, then pour a pre-vulcanization material in the upper half of the flask, close the upper part of the flask by a plate, and vulcanize by increasing the temperature while pressing. A silicon rubber of two-liquid solidification type may be used instead of the vulcanizable rubber.

When the silicone rubber has been hardened to have the rubber inherent elasticity, remove the rubber mold 3 from the flask, make a zig-zag cut 3c in the rubber mold, take out the model 1 and the part 2 bonded thereto, and separate the rubber mold into an upper rubber mold 3a and a lower rubber mold 3b. Thus, a rubber mold 3 having a cavity 4 of the same shape as the model 1 and the part 2 in it is obtained. By making such a cut 3c on the entire separation surface, the upper and lower rubber molds 3a and 3b can be put together exactly in line with each other, and the inside cavity shape can be accurately reproduced.

Such a cut 3c also has an effect to facilitate vacuuming and sealing of pressurized wax, when injecting a wax into the rubber mold 3 to create a wax mold. When taking out the wax mold from the rubber mold 3, by taking out the wax mold while deforming the lower rubber mold 3b after separating the upper rubber mold 3a from the mating surfaces (cut) 3c, even a wax mold having a complicated shape can be taken out easily without breaking it. In some cases, the interior of the rubber mold may be divided into several parts, or a core(s) may be inserted.

Since models have a variety of sizes, the sizes and thicknesses of rubber molds also change accordingly. In addition, the rubber hardness is also often changed in accordance with the rubber mold durability and the degree of difficulty of removing wax molds from the interior of the rubber molds.

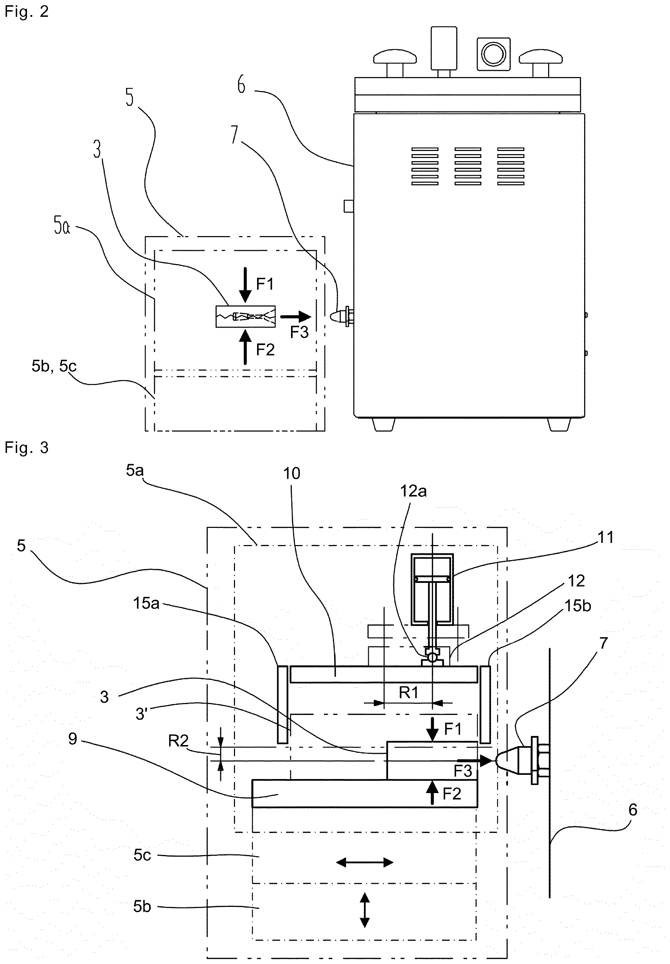

FIG. 2 and FIG. 3 show a conceptual view of a wax mold injection molding machine and a clamp apparatus used in the third step.

A wax mold injection molding machine 6 includes an injection nozzle 7, and basically has a function of vacuuming the cavity 4 in the rubber mold from the injection nozzle 7 and a function of pressurizing and injecting a molten wax. Furthermore, for manufacturing a large amount of high-quality wax molds at a high yield, the machine may be required to have functions of controlling a molten wax temperature, controlling an injection nozzle temperature, controlling an injection pressure, controlling a vacuuming time, controlling an injection time and the likes.

The clamp apparatus 5 exerts a clamp force (a clamp force F1, a clamp reaction force F2) by holding the rubber mold 3 between a mounting table 9 and a clamp plate 10 driven by a clamp force generator 11, aligns the injection nozzle 7 and a pouring gate 4a in vertical and horizontal directions, and seals the rubber mold 3 by pressing it to the injection nozzle 7 by a pressing force F3. In this state, a wax is injected into the cavity 4 of the rubber mold 3 from the injection nozzle 7.

Models 1 have various volumes and shapes, and thus the vertical and horizontal lengths as seen from the top of the rubber molds 3, 3' and the thickness as seen from the side of the rubber molds 3, 3' also vary. Therefore, to cope with this, there is required a further function(s) in addition to the basic functions in FIG. 2 in order to manufacture a predetermined wax mold by injecting a molten wax properly into the cavity 4 in the rubber mold.

The rubber mold 3 is not necessarily constant in thickness, and the clamp plate 10 and the mounting table 9 are not perfectly parallel to each other. Thus, the clamp force generator 11 and the clamp plate 10 are generally coupled with a floating mechanism 12 that pivotably supports the clamp plate 10 by a spherical bearing portion.

For clamping and properly sealing the rubber mold 3, it is necessary to apply a uniform surface pressure to a rubber mold mating surface 3c. Therefore,
it is desirable to clamp the rubber mold by applying a uniform force over the entire surface of the rubber mold. Since the rubber mold 3, 3' is different in size, it is necessary to move an acting point of the clamp force F1 (the clamp force generator 11) within a certain range R1.

A vertical movement mechanism 5b adjusts the height of the mounting table 9 within a certain range R2 to enable adjustment of the pouring gates 4a of the rubber molds 3, 3' having different thicknesses to the height of the injection nozzle 7.

A longitudinal movement mechanism 5c moves the mounting table 9 in the longitudinal direction. By generating a pressing force F3 by moving the pouring gate 4a of the rubber molds 3, 3' to the injection nozzle 7 with the longitudinal movement mechanism 5c, it is possible to perform vacuuming the cavity 4 in the rubber mold 3 and sealing the pressure at the time of wax injection into the cavity 4 in the third step.

In order to change a wax injection pressure from the injection nozzle 7 in accordance with the shape of the cavity 4, properties of the wax and the like and/or so that the rubber molds do not give away to the clamp force, it is necessary to adjust the clamp force F1 and the pressing force F3. Here, if the clamp force F1 or the pressing force F3 is excessive, the rubber mold 3 will be deformed, and it becomes impossible to obtain a wax mold close to the model.

### Prior Art List

### Patent Document

Patent Document 1: International Publication No. 2013/038448

EP 2,756,895 A1 discloses a clamp apparatus for a wax model injection molding machine includes a mold base having a flat surface on which a mold is placed; a clamp head movable in the vertical direction with regard to the mold base; first guide means extending parallel to a moving direction of the clamp head; and a pressing member which engages with the first guide member and is movable along the first guide means, wherein the pressing member has second guide means extending parallel to the flat surface, and the clamp head is movable along the second guide means. Thus, rubber molds for molding wax models can be pressured with uniform force.

### Summary of the Invention

### Problems to be Solved by the Invention

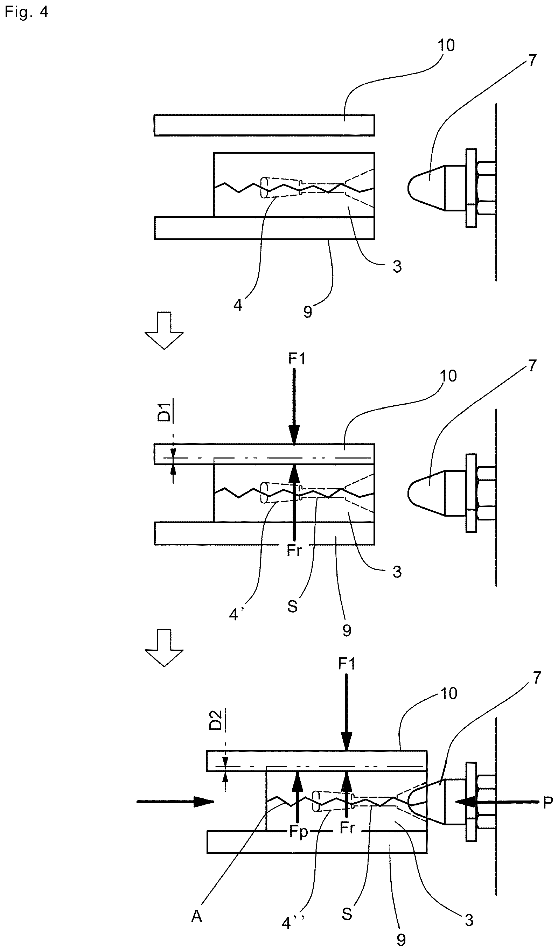

FIG. 4 shows a power balance at the time of injecting a wax while clamping the rubber mold 3 with the clamp apparatus 5.

A single-acting air cylinder, which advances a piston with an air supply for pressing and returns the piston by the effect of air exhaustion and a return spring, is generally used as the clamp force generator 11 for applying a clamp force F1 to a power point on the clamp plate 10. This is because a friction between the piston and a cylinder wall or the like can be reduced and the pressing force can be freely changed by controlling the air supply pressure.

When the rubber mold 3 is clamped between the mounting table 9 and the clamp plate 10, deflection (compression) D1 occurs in the rubber mold 3 due to the clamp force F1, and the volume and shape of the cavity 4 also change (4→4'). At this time, an elastic force Fr = K x D1 is generated in the rubber mold 3, assuming an elastic modulus of the rubber mold 3 is K. The forces F1 and Fr are the same in magnitude and opposite in direction to each other, and these forces balance. The clamp force F1 does not act on the cross-sectional area S of the cavity 4 ', and does act on the area A of the rubber mold mating surface 3c. Therefore, the value of F1 / A = K x D1 / A is assumed to be the sealing pressure of the rubber mold 3.

The rubber mold 3 is advanced to be pressed to the injection nozzle 7, then after vacuuming, a wax is injected from the nozzle 7 at a certain pressure P to be filled in the rubber mold 3. At this time, a force Fp calculated by multiplication of the injection pressure P and the sectional area S is generated in the cavity 4 and the clamp force F1 balances with a resultant force of Fr + Fp. Therefore, the elastic force Fr of the rubber mold 3 decreases from F1 to F1-Fp and the sealing pressure decreases to (F1-Fp)/A. Accordingly, the deflection of the rubber mold 3 decreases from D1 to D2 (D2 <D1), and the volume and shape of the cavity 4 change (4'→4").

Reduction of the elastic force Fr causes bleeding of the wax from the rubber mold mating surface 3c at the time of the wax injection, resulting in a need for deburring and the like in later steps. If the clamp force F1 is increased excessively to prevent this, the burden on the rubber mold 3 increases and the volume and shape (4") of the cavity during wax injection greatly vary from the initial volume and shape (4). Deformation of the cavity is a problem, because it means a product shape becomes different from the model 1. It is apparent that this problem is serious when the product is industrial precision parts. Changes in the cavity volume cause unstableness of the amount of metal used in the products. In particular, if the product is of a noble metal, even a small increase in the amount of use gives a significant impact on profit management of the manufacturer, because the product is manufactured in large quantities.

Therefore, an appropriate clamp force F1 must be determined in accordance with the injection pressure P and the kind of the rubber mold 3. However, the size and hardness of the rubber mold 3 are various and the injection pressure P requires to be varied depending on the kind of wax and the size and shape of the cavity 4. Thus, at present, there is no other way than to determine an appropriate clamp force F1 by trial and error for each rubber mold 3.

Manufacturers are forced to perform such trial and error for each of a number of rubber molds 3 and further, to input and store manufacturing conditions, such as injection pressures P and clamp forces F1 determined in this way, in manufacturing apparatus for each rubber molds 3. Further, as it is trial and error, craftsmen have to have high skills to determine optimum manufacturing conditions. This causes an increase in difficulty in manufacturing high quality products. Determination by trial and error causes variations in manufacturing conditions, resulting in variations in the volumes and shapes of the products.

### Solution to Problem

The present application discloses the following invention.

A clamp apparatus for wax mold injection molding comprising:
a mounting table to mount a rubber mold;
a clamp plate; and
a clamp force generator for changing a vertical position of the clamp plate relative to the mounting table, wherein:
   the clamp apparatus is configured to clamp a rubber mold between the mounting table and the clamp plate, and
   the clamp apparatus further comprises a lock mechanism for fixing a vertical position of the clamp plate relative to the mounting table.

It is preferable that:
the clamp force generator includes a clamp shaft coupled to the clamp plate, and
the lock mechanism fixes the clamp shaft.

It is preferable that:
the lock mechanism includes first and second friction portions configured to be able to be brought into contact with the clamp shaft,
the first and second friction portions are placed apart from each other by a distance smaller than a diameter of the clamp shaft, and
the lock mechanism fixes the clamp shaft by pressing the clamp shaft to the first and second friction portions.

It is preferable that:
the lock mechanism includes a lock bar rotatable around a fulcrum, the lock bar including an engaging portion configured to be able to be brought into contact with the clamp shaft, and
a driving unit for driving an end of the lock bar, and that:
   the distance from the fulcrum to the end is larger than the distance from the fulcrum to the engaging portion.

A method of manufacturing a wax mold using a clamp apparatus for wax mold injection molding, said clamp apparatus comprising:
a mounting table for mounting a rubber mold;
a clamp plate; and
a clamp force generator for changing a vertical position of the clamp plate relative to the mounting table,
said method comprising:
   fixing a vertical position of the clamp plate relative to the mounting table in a state that the rubber mold is clamped between the mounting table and the clamp plate, and
   injecting a wax into the rubber mold in a state that a vertical position of the clamp plate is fixed.

In the present application, the terms "vertical", "longitudinal", and "horizontal" mean directions perpendicular to each other. This definition is not critical, but should be flexibly interpreted so long as the effect of the invention can be achieved. "Vertical direction" does not necessarily mean an up-down direction. For example, in an embodiment that the clamp apparatus in the following embodiment is used with putting it down sideways, "vertical direction" may be a direction in a horizontal plane.

### Brief Description of the Drawings

FIG. 1 is an explanatory drawing of a method of manufacturing a rubber mold.
FIG. 2 is a side view of a wax mold injection molding machine and a clamp apparatus.
FIG. 3 is a side view of a clamp apparatus.
FIG. 4 shows a power balance at the time of injecting a wax by clamping a rubber mold in a clamp apparatus.
FIG. 5 shows a clamp apparatus 5A according to an embodiment of the present invention.
FIG. 6 is a front view of a clamp apparatus 5B according to an embodiment of the present invention.
FIG. 7 is a side view of a clamp apparatus 5B according to an embodiment of the present invention.
FIG. 8 shows a lock mechanism 20B.
FIG. 9 shows a wedge receiving member 25.
FIG. 10 explains a wedge effect by having a concave portion 25c.
FIG. 11 shows a modified embodiment 20C of a lock mechanism.
FIG. 12 shows a modified embodiment 20D of a lock mechanism.

### Mode for Carrying Out the Invention

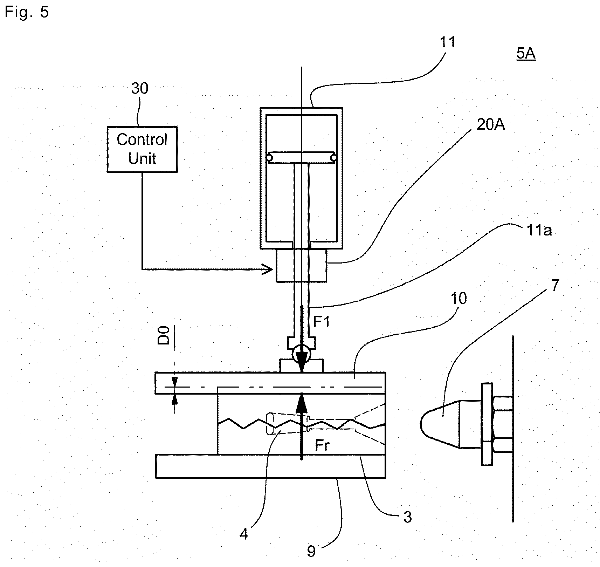

A principle of the present invention will be described with reference to FIG. 5 showing a clamp apparatus 5A according to an embodiment of the invention.

A clamp apparatus 5A solves problems of the prior arts by comprising a lock mechanism 20A for fixing a vertical position of a clamp plate 10 relative to a mounting table 9. Preferably, the lock mechanism 20A fixes a vertical position of the clamp plate 10 in a state that a rubber mold 3 is clamped by the clamp plate 10. By fixing the position of the clamp plate 10, it is possible to prevent or suppress a decrease in the elastic force Fr due to the force Fp at the time of injecting a wax. In a preferred embodiment, a wax mold is manufactured by fixing a vertical position of the clamp plate 10 relative to the mounting table 9 in a state that the rubber mold 3 is compressed by clamping, and injecting wax into the rubber mold 9 in that state.

For example, if it is assumed that the position of the clamp plate 10 can be completely fixed (movement of the clamp plate 10 can be made to be zero) by the lock mechanism 20A, the clamp force F1 can be made to be a minimum force capable of preventing wax bleeding from the rubber mold mating surface 3c. Assuming that the deflection of the rubber mold 3 at the time of clamping with the minimum clamp force F1 is D0, the deflection D0 will not change even when a wax is injected. Therefore, the elastic force Fr will not decrease, and the wax will not bleed out and deformation of the cavity 4 can be minimized. Thus, manufacturing of products further faithful to the model 1 becomes possible and quality of precision components and the like can be heightened. As the clamp force F1 can be determined without considering the injection pressure P, determination of the clamp force F1 becomes easy or unique. Therefore, the amount of a metal used in the products can be made constant. It is also possible to eliminate the necessity of inputting and storing the manufacturing conditions such as the clamp force F1 and the injection pressure P in a manufacturing apparatus for each rubber mold 3.

Physically speaking, complete fixation is impossible in reality. However, if the movement of the clamp plate 10 is made sufficiently small by the lock mechanism 20A, the above effect is substantially achieved. In the present invention, the expression "fixing the vertical position of the clamp plate relative to the mounting table" is applied not only to the case where the movement of the clamp plate 10 is completely zero, but also to the case where the movement of the clamp plate 10 is made small so as to prevent or suppress the decrease of the elastic force Fr due to the force Fp at the time of wax injection.

The clamp apparatus 5A can include a control unit 30 to control the lock mechanism 20A. In a preferable embodiment, the control unit 30 determines whether the rubber mold 3 is clamped by the clamp plate 10. If it is determined that the mold is clamped, the control unit 30 controls the lock mechanism 20A to fix the position of the clamp plate 10. In this case, the control unit 30 can be a computer. Whether the mold is clamped can be determined based on the clamp force F1. The control unit 30 can include a sensor for measuring the clamp force F1. For example, when the clamp force F1 is generated by an air cylinder 11, the clamp force F1 can be measured by the air pressure supplied to the air cylinder 11. To prevent a decision error caused by a piping resistance and the like, it is possible to use a timer and to determine that the mold is clamped when the clamp force F1 above a certain level continues for over a certain amount of time. The operator may determine that the rubber mold 3 is clamped with his eyes, and operates the control unit 30 so as to fix the position of the clamp plate 10.

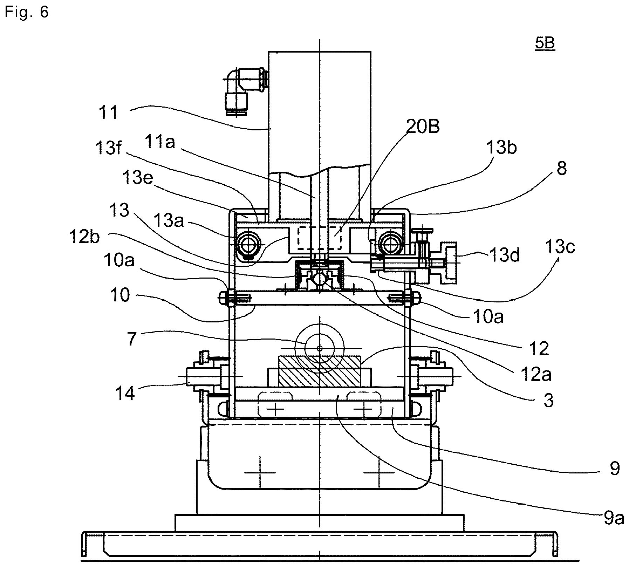

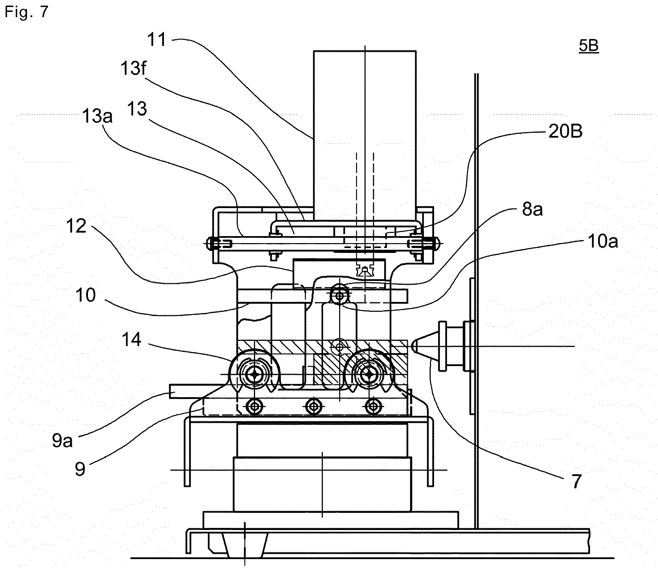

FIG. 6 and FIG. 7 show a clamp apparatus 5B according to another embodiment of the present invention. FIG.6 and FIG. 7 correspond to the section above the rubber mold mounting table 9 of the clamp mechanism 5a in FIG 3.

The clamp apparatus 5B of the present embodiment comprises a clamp mechanism housing 8, a mounting table 9 having a substantially horizontal mounting surface for mounting a rubber mold 3, a clamp plate 10 movable in the vertical direction, a clamp force generator 11, a floating mechanism 12, a clamp force generator movement mechanism 13, a horizontal movement mechanism 14, and a lock mechanism 20B.

The housing 8 can be made of a metal material such as a metal plate. The mounting table 9 has a rubber mold positioning insertion plate 9a capable of mounting the rubber mold 3. The mounting surface is formed on the rubber mold positioning insertion plate 9a. The clamp plate 10 is formed from a substantially flat metal plate or the like.

The clamp force generator 11 changes the vertical position of the clamp plate 10 relative to the mounting table 9, and exerts a clamp force F1 on the clamp plate 10. Preferably, the clamp force generator 11 is a single-acting air cylinder capable of moving the clamp plate 10 in the vertical direction by a clamp shaft 11a operated by compressed air, and exerting a clamp force F1 on the clamp plate 10.

The clamp shaft 11a and the clamp plate 10 are coupled via the floating mechanism 12. The floating mechanism 12 includes a swing bearing part 12 and a movement limiting mechanism 12b.

The swing bearing part 12a couples the clamp plate 10 to the clamp shaft 11a by means of a ball joint or the like, while allowing the clamp plate 10 to swing horizontally and longitudinally.

The movement limiting mechanism 12b permits longitudinal movement of the clamp shaft 11a when the clamp plate 10 is at a top dead center, and fixes the longitudinal position of the clamp shaft 11a relative to the clamp plate 10 when the clamp plate has descended from the top dead center. Accordingly, when the clamp plate 10 is at the top dead center, it is possible to adjust an acting point of the clamp force F1 on the clamp plate 10 in the longitudinal direction in accordance with the size of the rubber mold 3. In the descending process of the clamp plate 10, it is possible to prevent displacement of the acting point of the clamp force F1.

The clamp plate 10 has a protruding portion 10a at the left and right sides. The clamp mechanism housing 8 has an engaging portion 8a that engages with the protruding portion 10a of the clamp plate 10 while it is at the top dead center. By the engagement of the engaging portion 8a and the protruding portion 10a, the clamp plate 10 is prevented from moving together with the clamp shaft 11a when the clamp shaft 11a moves in the longitudinal direction.

The clamp force generator movement mechanism 13 moves the clamp force generator 11 in the longitudinal direction.

The clamp force generator movement mechanism 13 comprises a guide shaft 13a for guiding the clamp force generator 11 in the longitudinal direction, a rack 13b and a pinion 13c for driving the clamp force generator 11 in the longitudinal direction, and a knob 13d for rotating the pinion 13c.

The guide shaft 13a is mounted in the clamp mechanism housing 8 with a slight clearance. A clamp reaction force receiver 13e is provided at the left and right sides of the entire moving area of the clamp force generator movement mechanism 13, so that even when the clamp force generator 11 is operated, a great reaction force will not act on the guide shaft 13a, but directly act on the clamp mechanism housing 8.

When the clamp force generator 11 is moved by the rotation of the knob 13d, it is freely movable because a slight clearance is provided between the clamp reaction force receiver 13e and the clamp mechanism housing 8. However, when the clamp shaft 11a descends and the rubber mold is clamped, the guide shaft 13a is raised by the reaction force and the clamp reaction force receiver 13e closely contacts with the clamp mechanism housing 8 to receive the great reaction force.

The vertical position of the clamp force generator movement mechanism 13 relative to the mounting table 9 is basically fixed. In the state where the clamp plate 10 clamps the rubber mold 3, the clamp reaction force receiver 13e closely contacts with the clamp mechanism housing 8, and the vertical position of the clamp force generator movement mechanism 13 relative to the mounting table 9 is substantially fixed.

The horizontal movement mechanism 14 guides the clamp mechanism 5a in the horizontal direction in accordance with the force in the horizontal direction that acts on the clamp mechanism 5a.

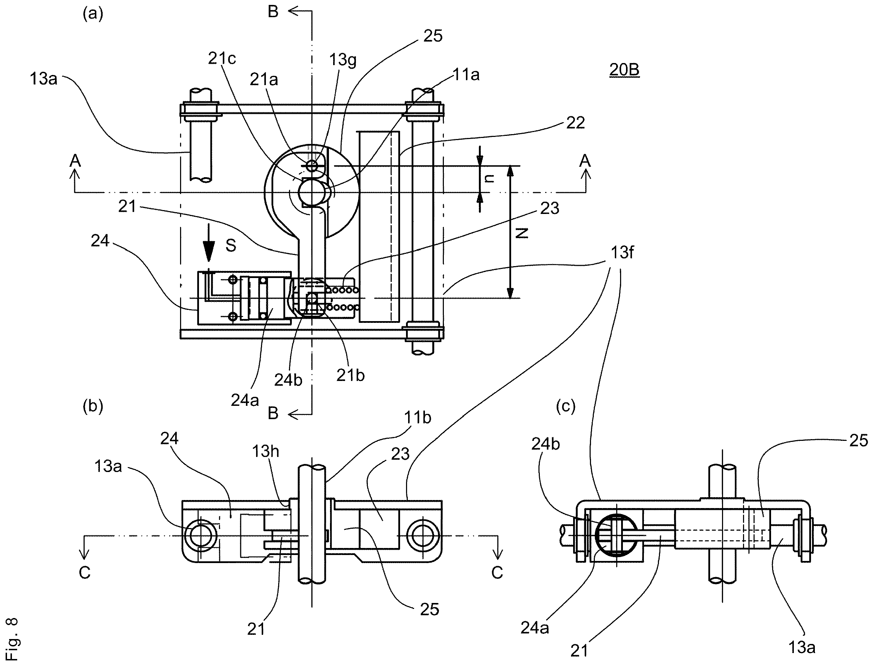

FIG. 8 shows the lock mechanism 20B. As shown in the drawing, the lock mechanism 20B comprises a lock bar 21, a block member 22, an elastic member 23, an air cylinder 24, and a wedge receiving member 25.

The lock bar 21 is a flat-bar-shaped member having a circular hole 21a at one end and a circular hole 21b at the other end. The circular hole 21a is supported rotatably in a horizontal plane about a fixed axis 13g that is fixed to a housing 13f of the clamp force generator movement mechanism 13. The circular hole 21b is supported rotatably about a drive shaft 24b formed at a front end of a piston 24a of the air cylinder 24.

The lock bar 21 has an engaging portion 21c engageable with the clamp shaft 11a at an intermediate position between the circular holes 21a and 21b. The engaging portion 21c can be shaped complementary to the clamp shaft 11a. The engaging portion 21c is provided at a position where the distance N between the circular holes 21a and 21b is sufficiently greater than the distance n between the circular hole 21a and the engaging portion 21c.

The block member 22 is fixed to the housing 13f of the clamp force generator movement mechanism 13. An elastic member 23 such as a spring is interposed between the other end side of the lock bar 21 and the block member 22.

The air cylinder 24 drives the piston 24a in the horizontal direction (left and right direction in FIG. 8 (a)) by the pressure of the air S and the pressing force of the elastic member 23. The air cylinder 24 is positioned so as to provide a slight clearance between the engaging portion 21c and the clamp shaft 11a, when the air S is not supplied.

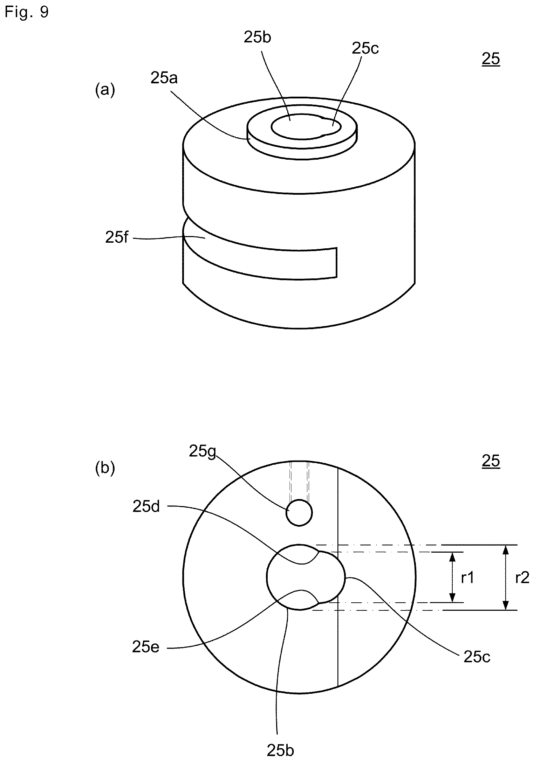

FIG. 9 shows the wedge receiving member 25. FIG. 9 (a) is a perspective view. FIG. 9 (b) is a C-C cross section of FIG. 8 (b). The wedge receiving member 25 is a member having a substantially cylindrical outer shape with a protruding portion 25a. The wedge receiving member 25 is provided with a guide hole 25b of substantially the same diameter as the clamp shaft 11a for guiding the clamp shaft 11a, and a concave portion 25c opening to the guide hole 25b. The guide hole 25b and the concave portion 25c penetrate through the wedge receiving member 25 in the vertical direction. In a preferred embodiment, the concave portion 25c has an arcuate cross-sectional shape with a diameter smaller than the guide hole 25b positioned at an eccentric position to the guide hole 25b. A connecting part of the guide hole 25b and the concave portion 25c constitutes friction portions 25d and 25e for generating a friction against the clamp shaft 11a. The distance r1 between the friction portions 25d an 25e is smaller than the diameter r2 of the guide hole 25b (or the clamp shaft 11a).

On the side of the wedge receiving member 25, a notch 25f of substantially the same width as the thickness of the lock bar 21 is formed for guiding the lock bar 21 in a horizontal plane. The wedge member 25 is preferably a single piece member formed by processing a cylindrical rod from the viewpoint of cost and strength. The concave portion 25c can be formed by machining with an end mill or the like, and the notch 25f can be formed by machining with a milling tool or the like. The wedge receiving member 25 is fixed to the housing 13f with the protruding portion 25a inserted into an engaging hole 13h of the housing 13f. 25g in the drawing is a receiving hole of the fixing pin 13g.

Operation of the lock mechanism 20B will be explained.

When the air S is not supplied to the air cylinder 24, there is a gap between the engaging portion 21c and the clamp shaft 11a, and there is a gap between the clamp shaft 11a and the friction portions 25d and 25e. So, the clamp shaft 11a is freely movable in the vertical direction.

When the air S is supplied to the air cylinder 24, the piston 24a rotates the lock bar 21 about the fixed axis 13g, and the clamp shaft 11a is pressed to the concave portion 25c by the engaging portion 21c. By this pressing force, a friction occurs between the clamp shaft 11a and the friction portions 25d and 25e, and the vertical position of the clamp shaft 11a relative to the mounting table 9 is fixed.

Here, as the distance N is sufficiently greater than the distance n, it is possible to increase the pressing force to the wedge receiving member 25 from the clamp shaft 11a. Further, since the pressing force of the clamp shaft 11a acts on two points (friction portions 25d and 25e), a great reaction force is generated by the wedge effect, and the vertical position of the clamp shaft 11a can be firmly fixed.

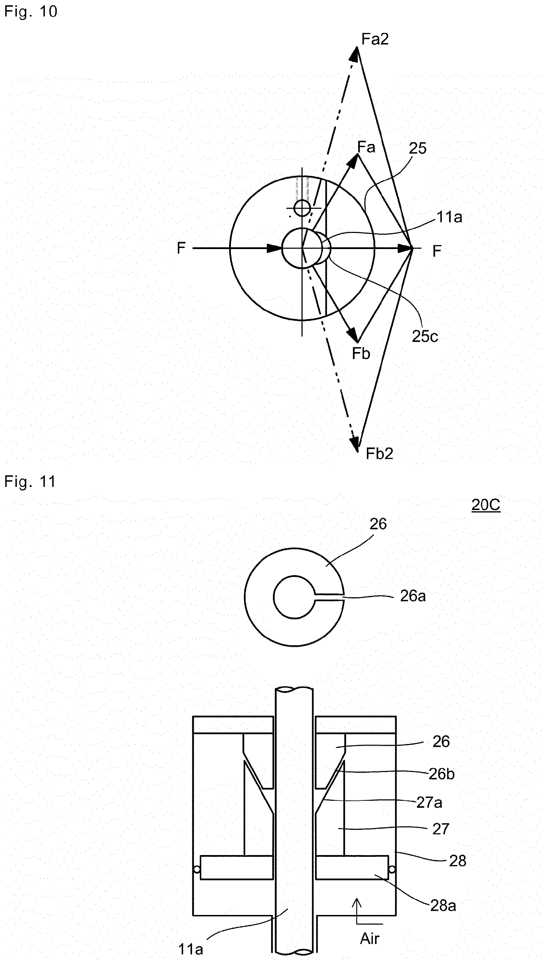

FIG. 10 illustrates the wedge effect by having the concave portion 25c. If there is no concave portion 25c, a reaction force occurs only on a sigle position of the wedge receiving member 25, and the magnitude of the reaction force is equal to the pressing force F of the clamp shaft 11a. However, in the present embodiment, since there is a concave portion 25c, reaction forces Fa and Fb occur in two friction portions 25d and 25e. As the distance r1 between the friction portions 25d and 25e increases (provided r1 <r2), the reaction forces Fa and Fb can be increased as is shown as Fa2 and Fb2.

The frictional force acting on the clamp shaft 11a is a product of the reaction force Fa (or Fb) and the friction coefficient. So, the frictional force can be effectively increased by the above wedge effect. The friction coefficient depends on the material and surface roughness of the outer wall of the clamp shaft 11a and the inner wall of the concave portion 25c. So, the friction coefficient can be increased by selecting suitable material and appropriate surface roughness finish, or by providing a spiral groove on the clamp shaft 11a and/or the concave portion 25c.

Although the rock bar 21 moves rotationally while the piston 24a moves linearly, no problem occurs in the above operation if the diameter of the circular hole 21b is slightly larger than the drive shaft 24b. When the clamp shaft 11a is pressed to the concave portion 25c, a force perpendicular to the driving direction of the clamp shaft 11a is exerted on it, however, if the diameter difference between the clamp shaft 11a and the guide hole 25b is sufficiently small, no adverse effect occurs in the function and operation of the clamp force generator 11.

In this embodiment, as a particularly preferred embodiment, the wedge receiving member 25 having the protruding portion 25a, the guide hole 25b, and the notch 25f has been shown. However, as long as the friction portions 25d and 25e are provided, the clamp shaft 11a can be fixed by the above wedge effect, and so, the other configurations can be omitted.

The lock mechanism 20B in the above embodiment may be modified in various forms.

FIG. 11 shows a first modification 20C of the lock mechanism. In the lock mechanism 20C in FIG. 10, a sleeve 26 having a taper 26b with a split 26a and a sleeve 27 having a taper 27a complementary to the taper 26b is fittingly inserted into the clamp shaft 11a. When the sleeve 27 is pressed to the sleeve 26 by the piston 28a or the like of the air cylinder 28, the position of the clamp shaft 11a can be fixed with the fastening by the sleeve 26.

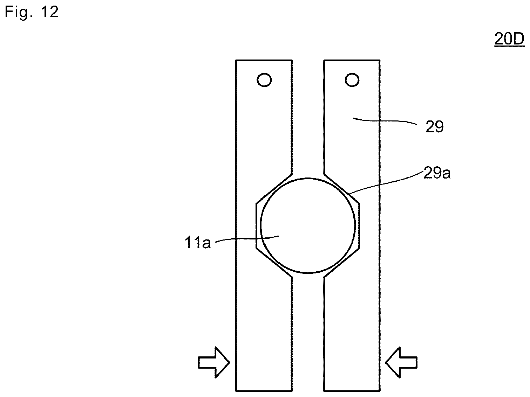

FIG. 12 shows a second modification 20D of the lock mechanism. The lock mechanism 20D in FIG. 11 includes a pair of blocks or plates 29 having tapers 29a engaging with the clamp shaft 11a. The position of the clamp shaft 11a can be fixed by rotatably supporting one end(s) of the block or plate 29, exerting a pressing force to the other end(s), and sandwiching the clamp shaft 11a by the taper 29a.

As a further embodiment, it is also possible to fix the position of the clamp shaft 11a by forming a rack in the vertical direction in the outer wall of the clamp shaft 11a, engaging the rack with a pinion, and fixing the pinion.

The clamp apparatus 5B can include a control unit 30 likewise to the control unit 30 in the clamp apparatus 5A.

Preferred embodiments have been described above. The above embodiments are to be understood as examples. Various modifications are possible within the scope of the invention as set forth in the following claims.

For example, although in the above embodiments, the case of fixing the position of the clamp shaft 11a has been described, the effect of the present invention is achieved so long as the vertical position of the clamp plate 10 relative to the mounting table 9 is fixed. An object to be fixed should not be limited to the clamp shaft 11a.

### Industrial Applicability

The present invention can be applied to a clamp apparatus used for fixing a rubber mold for wax mold injection molding for manufacturing small articles, such as Jewelry goods and accessories, industrial products and the like, and can be applied to manufacturing of wax molds.

### Description of Reference Numerals

- 1: Model
- 2: part
- 3, 3': Rubber mold
- 4, 4', 4": Cavity
- 5, 5A, 5B: Clamp apparatus
- 5a: Clamping mechanism
- 5b: Vertical movement mechanism
- 5c: Longitudinal movement mechanism
- 6: Wax mold injection molding machine
- 7: Injection nozzle
- 8: Clamp mechanism housing
- 9: Rubber mold mounting table
- 10: Clamp plate
- 11: Clamp force generator
- 11a: Clamp shaft
- 12: Floating mechanism
- 13: Clamp force generator moving mechanism
- 13f: Clamp force generator movement mechanism housing
- 13g: Fixed axis
- 14: Horizontal movement mechanism
- 20A - 20D: Lock mechanism
- 21: Lock bar
- 21c: Engaging portion
- 24: Air cylinder
- 24b: Drive shaft
- 25: Wedge receiving member
- 25d, 25e: Friction portion
- 30: Control unit

## Claims

1. A clamp apparatus (5A, 5B) for wax mold injection molding comprising:
a mounting table (9) to mount a rubber mold;
a clamp plate (10); and
a clamp force generator (11) for changing a vertical position of the clamp plate (10) relative to the mounting table (9),
the clamp apparatus (5A, 5B) being configured to clamp a rubber mold (3) between the mounting table (9) and the clamp plate (10), **characterized in that**:
the clamp apparatus (5A, 5B) further comprises a lock mechanism (20A-20D) capable of fixing a vertical position of the clamp plate (10) relative to the mounting table (9).

2. A clamp apparatus (5A, 5B) according to claim 1, wherein:
the clamp force generator (11) includes a clamp shaft (11a) coupled to the clamp plate (10), and
the lock mechanism is capable of fixing the clamp shaft.

3. A clamp apparatus (5A, 5B) according to claim 2, wherein:
the lock mechanism includes first and second friction portions (25d, 25e) configured to be able to be brought into contact with the clamp shaft (11a),
the first and second friction portions (25d, 25e) are placed apart from each other by a distance smaller than a diameter of the clamp shaft (11a), and
the lock mechanism fixes the clamp shaft (11a) by pressing the clamp shaft (11a) to the first and second friction portions (25d, 25e).

4. A clamp apparatus (5A, 5B) according to claim 2 or 3, wherein:
the lock mechanism includes a lock bar (21) rotatable around a fulcrum (21a), the lock bar (21) including an engaging portion (21c) configured to be able to be brought into contact with the clamp shaft (11a), and
a driving unit (24) for driving an end of the lock bar (21), and
the distance from the fulcrum (21a) to the end is larger than the distance from the fulcrum (21a) to the engaging portion (21c).

5. A method of manufacturing a wax mold using a clamp apparatus (5A, 5B) for wax mold injection molding, said clamp apparatus (5A, 5B) comprising:
a mounting table (9) for mounting a rubber mold (3);
a clamp plate (10); and
a clamp force generator (11) for changing a vertical position of the clamp plate (10) relative to the mounting table (9), **characterized in that**:
said method comprises:
fixing a vertical position of the clamp plate (10) relative to the mounting table (9) in a state that the rubber mold (3) is clamped between the mounting table (9) and the clamp plate (10), and
injecting a wax into the rubber mold (3) in a state that a vertical position of the clamp plate (10) is fixed.

## Patentansprüche

1. Schließvorrichtung (5A, 5B) für den Wachsform-Spritzguss, die Folgendes umfasst:
eine Aufspannfläche (9) zum Aufspannen einer Gummiform,
eine Spannplatte (10) und
einen Schließkrafterzeuger (11) zum Ändern einer vertikalen Position der Spannplatte (10) in Bezug auf die Aufspannfläche (9),
wobei die Schließvorrichtung (5A, 5B) so konfiguriert ist, dass sie eine Gummiform (3) zwischen der Aufspannfläche (9) und der Spannplatte (10) aufspannt, **dadurch gekennzeichnet, dass**:
die Schließvorrichtung (5A, 5B) ferner einen Verriegelungsmechanismus (20A bis 20D) umfasst, der in der Lage ist, eine vertikale Position der Spannplatte (10) in Bezug auf die Aufspannfläche (9) zu fixieren.

2. Schließvorrichtung (5A, 5B) nach Anspruch 1, wobei:
der Schließkrafterzeuger (11) eine Spannwelle (11a) aufweist, die mit der Spannplatte (10) gekoppelt ist, und
der Verriegelungsmechanismus in der Lage ist, die Spannwelle zu fixieren.

3. Schließvorrichtung (5A, 5B) nach Anspruch 2, wobei:
der Verriegelungsmechanismus einen ersten und einen zweiten Reibabschnitt (25d, 25e) aufweist, die so konfiguriert sind, dass sie sich mit der Spannwelle (11a) in Kontakt bringen lassen,
der erste und der zweite Reibabschnitt (25d, 25e) in einem Abstand zueinander angeordnet sind, der geringer ist als ein Durchmesser der Spannwelle (11a), und
der Verriegelungsmechanismus die Spannwelle (11a) fixiert, indem er die Spannwelle (11a) an den ersten und den zweiten Reibabschnitt (25d, 25e) drückt.

4. Schließvorrichtung (5A, 5B) nach Anspruch 2 oder 3, wobei:
der Verriegelungsmechanismus einen Riegel (21) aufweist, der um einen Drehpunkt (21a) drehbar ist, wobei der Riegel (21) einen Rastabschnitt (21c) aufweist, der so konfiguriert ist, dass er sich mit der Spannwelle (11a) in Kontakt bringen lässt, und eine Antriebseinheit (24) zum Antreiben eines Endes des Riegels (21) und
der Abstand vom Drehpunkt (21a) zum Ende größer ist als der Abstand vom Drehpunkt (21a) zum Rastabschnitt (21c).

5. Verfahren zum Herstellen einer Wachsform mithilfe einer Schließvorrichtung (5A, 5B) für den Wachsform-Spritzguss, wobei die Schließvorrichtung (5A, 5B) Folgendes umfasst:
eine Aufspannfläche (9) zum Aufspannen einer Gummiform (3),
eine Spannplatte (10) und
einen Schließkrafterzeuger (11) zum Ändern einer vertikalen Position der Spannplatte (10) in Bezug auf die Aufspannfläche (9), **dadurch gekennzeichnet, dass**:
das Verfahren Folgendes umfasst:
Fixieren einer vertikalen Position der Spannplatte (10) in Bezug auf die Aufspannfläche (9) in einem Zustand, in dem die Gummiform (3) zwischen der Aufspannfläche (9) und der Spannplatte (10) aufgespannt ist, und
Einspritzen eines Wachses in die Gummiform (3) in einem Zustand, in dem eine vertikale Position der Spannplatte (10) fixiert ist.

## Revendications

1. Appareil de serrage (5A, 5B) servant à des fins de moulage par injection d'un moule en cire comportant :
une table de montage (9) servant à des fins de montage d'un moule en caoutchouc ;
une plaque de serrage (10) ; et
un générateur de force de serrage (11) servant à changer une position verticale de la plaque de serrage (10) par rapport à la table de montage (9),
l'appareil de serrage (5A, 5B) étant configuré pour serrer un moule en caoutchouc (3) entre la table de montage (9) et la plaque de serrage (10), **caractérisé en ce que** :
l'appareil de serrage (5A, 5B) comporte par ailleurs un mécanisme de verrouillage (20A-20D) en mesure de fixer une position verticale de la plaque de serrage (10) par rapport à table de montage (9).

2. Appareil de serrage (5A, 5B) selon la revendication 1, dans lequel :
le générateur de force de serrage (11) comprend un arbre de serrage (11a) couplé à la plaque de serrage (10), et
le mécanisme de verrouillage est en mesure de fixer l'arbre de serrage.

3. Appareil de serrage (5A, 5B) selon la revendication 2, dans lequel :
le mécanisme de verrouillage comprend des première et deuxième parties de frottement (25d, 25e) configurées pour être en mesure d'être mises en contact avec l'arbre de serrage (11a),
les première et deuxième parties de frottement (25d, 25e) sont placées de manière séparée l'une par rapport à l'autre sur une distance inférieure à un diamètre de l'arbre de serrage (11a), et
le mécanisme de verrouillage fixe l'arbre de serrage (11a) en comprimant l'arbre de serrage (11a) sur les première et deuxième parties de frottement (25d, 25e).

4. Appareil de serrage (5A, 5B) selon la revendication 2 ou la revendication 3, dans lequel :
le mécanisme de verrouillage comprend une barre de verrouillage (21) en mesure de tourner autour d'un point d'appui (21a), la barre de verrouillage (21) comprenant une partie de mise en prise (21c) configurée pour être en mesure d'être mise en contact avec l'arbre de serrage (11a), et
une unité d'entraînement (24) servant à entraîner une extrémité de la barre de verrouillage (21), et
la distance entre le point d'appui (21a) et l'extrémité est supérieure à la distance entre le point d'appui (21a) et la partie de mise en prise (21c).

5. Procédé de fabrication d'un moule en cire en utilisant un appareil de serrage (5A, 5B) servant à des fins de moulage par injection d'un moule en cire, ledit appareil de serrage (5A, 5B) comportant :
une table de montage (9) servant à des fins de montage d'un moule en caoutchouc (3);
une plaque de serrage (10) ; et
un générateur de force de serrage (11) servant à changer une position verticale de la plaque de serrage (10) par rapport à la table de montage (9), **caractérisé en ce que** :
ledit procédé comporte les étapes consistant à :
fixer une position verticale de la plaque de serrage (10) par rapport à table de montage (9) dans un état dans lequel le moule en caoutchouc (3) est serré entre la table de montage (9) et la plaque de serrage (10), et
injecter une cire dans le moule en caoutchouc (3) dans un état dans lequel une position verticale de la plaque de serrage (10) est fixée.
